# EUROPEAN PATENT APPLICATION

(11) **EP 1 772 305 A1**
(43) Date of publication of application: **11.04.2007**
(21) Application number: 06115005.8
(22) Date of filing: 06.06.2006
(51) Int. Cl.: B60N 2/07, B60N 2/30

(54) **Seat for a motor vehicle**

(30) Priority: 05.10.2005 IT TO20050698
(71) Applicant: Martur Sunger ve Koltuk Tesisleri Ticaret Sanayi A.S., 80670 Maslak Istanbul (TR)
(72) Inventor: Bracesco, Roberto, 10043, Orbassano (Torino) (IT)
(74) Representative: Notaro, Giancarlo

(57) **Abstract**

Described herein is a seat for a motor vehicle, comprising a cushion and a backrest with respective frames provided with means for connection to the floor panel, which enable a displacement of the seat between a condition of normal use and an inoperative condition of reduced encumbrance, where the seat is folded on the floor panel, in which the seat comprises means (8) for transmitting motion from the frame (7) of the backrest to the frame (6) of the cushion, which include a closed-loop transmission element.

## Description

### TEXT OF THE DESCRIPTION

The present invention relates to a seat for a motor vehicle, of the type comprising a cushion and a backrest with respective frames provided with means for connection to the floor panel, which enable a displacement of the seat between a condition of normal use and an inoperative condition of reduced encumbrance, where the seat is folded on the floor panel.

Seats of this type are commonly encountered, for example, in commercial vehicles or in monovolume cars.

The purpose of the invention is to propose a seat for a motor vehicle of the type specified above that will be inexpensive, of reduced encumbrance in its inoperative condition, and simple to use.

With a view to achieving said purpose, the subject of the invention is a seat for a motor vehicle having all the characteristics indicated at the start of the present description and further characterized in that the seat comprises means for transmitting motion from the frame of the backrest to the frame of the cushion, which include a closed-loop transmission element.

Further advantageous characteristics of the invention will emerge from the ensuing description with reference to the annexed plate of drawings, which is provided purely by way of non-limiting example, and in which:
- Figure 1 is a schematic perspective view of a seat in its condition of normal use, with reference to an example of embodiment;
- Figure 2 is a schematic perspective view of a seat in its inoperative condition of reduced encumbrance;
- Figure 3 is a schematic view of the frame of the seat in the condition of normal use;
- Figure 4 is a schematic view of the frame of the seat in a condition intermediate between the condition of normal use and the inoperative condition; and
- Figure 5 is a schematic view of the frame of the seat in the inoperative condition of reduced encumbrance.

The drawings illustrate the principles underlying the invention with reference to an example of embodiment of the seat. As persons skilled in the branch will readily understand, said principles can be applied, on the other hand, also to seats having a conformation of their frame and/or of the means for connection to the floor panel that is completely different from the one illustrated herein.

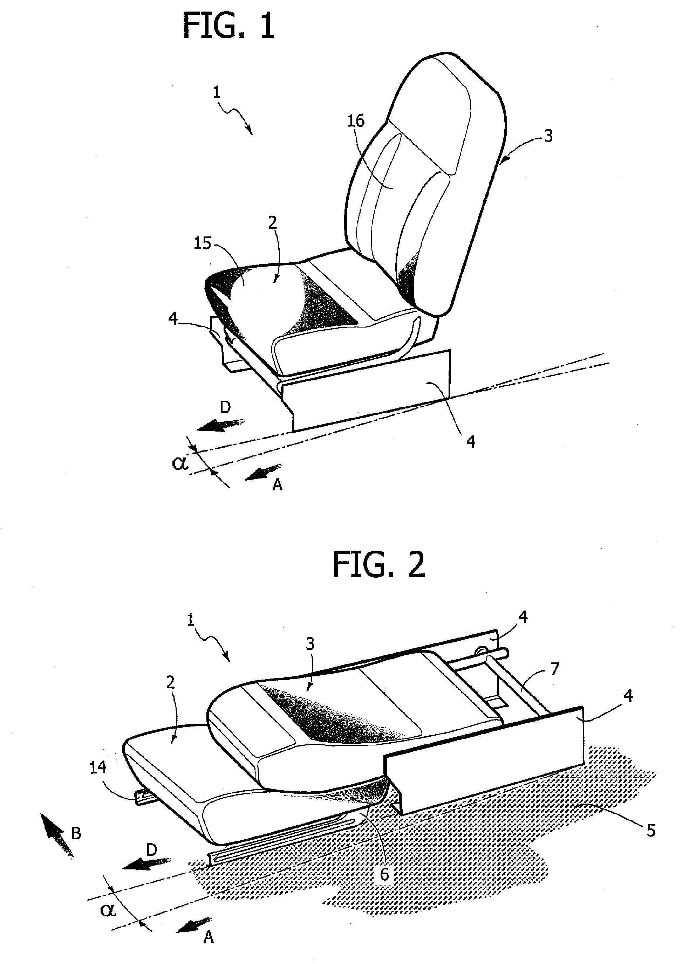

In Figure 1, the reference number 1 designates as a whole a seat for a motor vehicle comprising a cushion 2, a backrest 3, and means for connection to the floor panel, which comprise two vertical side plates 4 with bottom edges bent under, which are fixed to the floor panel and to which the load-bearing structure of the seat is screwed or welded.

In Figure 1, the seat is illustrated in its condition of normal use.

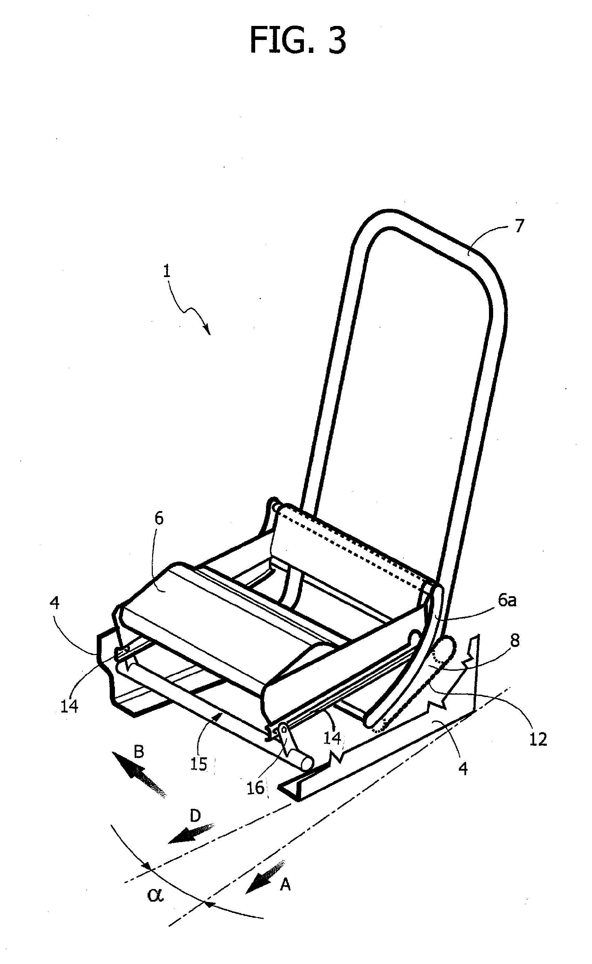

The cushion 2 and the backrest 3 are provided with respective frames 6 and 7 (visible in Figure 3), which are connected to one another and are connected to the floor panel 5 via the plates 4.

In Figure 2, the seat 1 is illustrated in its inoperative condition of reduced encumbrance, in which the seat 1 is folded on the floor panel 5 with the backrest 3 partially overlapping the cushion 2.

Visible in Figure 3 is the bearing structure of the seat. The reference number 6 designates as a whole the frame of the cushion, and the reference number 7 designates as a whole the frame of the backrest.

Once again with reference to Figure 3, the seat 1 comprises means 8 for operatively connecting the frame 7 of the backrest to the frame 6 of the cushion, in such a way that, by displacing the backrest manually into its position where it is rotated forwards a simultaneous movement of the cushion is automatically obtained.

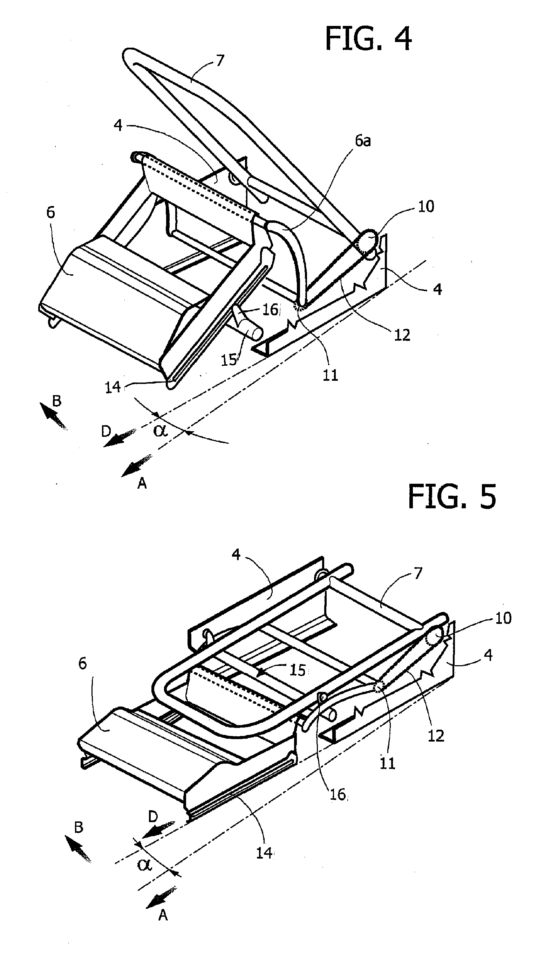

With reference to Figure 4, if the frame 7 of the seat is rotated forwards about its bottom articulation, said movement is transmitted, via the transmission means 8 (described in what follows), to the frame 6 of the cushion.

Figure 4 illustrates a position of the seat intermediate between the condition of normal use and the inoperative condition where the seat is folded on the floor panel.

In a preferred version, the means 8 for transmitting motion from the frame 7 of the backrest to the frame 6 of the cushion comprise a chain transmission and gears.

In particular, with reference to Figure 4, the means 8 for transmission of motion comprise: a gear 10, which is mounted so that it can rotate about the axis of articulation of the frame 7 and is connected to said frame; a gear 11, which is mounted so that it can rotate on the fixed structure and is connected to one of two side connecting rods 6a that connect the frame 6 of the cushion to the floor panel; and a closed-loop chain 12 engaged on the gears 10, 11. A rotation of the frame 7 is transmitted from the gears 10, 11 and from the chain 12 to the connecting rod 6a, which forces the frame 6 of the cushion to be brought into in the advanced position of Figure 5.

With reference to Figures 3 and 4, the frame 7 of the backrest has the base articulated to the floor panel 5 about a first transverse axis, and the frame 6 of the cushion is connected at the rear in an articulated way to the free end of the connecting rods 6a. The connecting rods 6a are mounted oscillating on the floor panel 5 about a second transverse axis parallel and advanced with respect to the first transverse axis. The frame 6 of the cushion moreover carries two longitudinal guides 14, which are engaged so that they can slide on the ends of a transverse guide element 15, which has two ends 16 and which, in the example illustrated, is fixed to the floor panel 5.

When the backrest 7 is tipped down forwards, there occurs an oscillation forwards of the rear part of the cushion and a simultaneous sliding of the longitudinal guides 14 with respect to the ends 16 of the fixed element 15, until the cushion lies down completely flat on the floor panel. At the end of this operation the cushion comes to be in front of the position that the cushion itself assumes in the condition of normal use of the seat.

With reference to Figure 5, it may be noted, that in the inoperative condition of the seat, the longitudinal guides 14 carried by the frame 6 of the cushion are disengaged from the ends 16.

During the operations for restoring the condition of normal use of the seat, the longitudinal guides engage once again with the ends 16 of the transverse guide element 15.

The seat comprises a stuffing 15 set on the frame 6 of the cushion and a stuffing 16 set on the frame 7 of the backrest.

Furthermore, in the specific example illustrated, the means for connection to the floor panel are provided in such a way as to enable, during displacement between the condition of normal use and the inoperative condition, a displacement of the seat 1 also in a horizontal direction B orthogonal to the longitudinal direction A of the vehicle.

With reference to Figure 3, the plates 4 (only one of which is partially visible in the figure) are positioned on the floor panel 5 in a direction D inclined with respect to the longitudinal direction A of the vehicle. The direction D in which the means for connection to the floor panel are arranged consequently forms an angle with the longitudinal direction A of the vehicle.

In this way, when the seat is tipped down, the entire structure made up of the cushion 2 and the backrest 3 performs a displacement, which also comprises a component in the horizontal direction B orthogonal to the longitudinal direction A of the vehicle.

This is useful in the case where the seat in question is mounted on a vehicle, in which the seat in its inoperative condition folded down on the floor panel would otherwise interfere with the central tunnel of the floor panel.

In Figures 3, 4, and 5, the direction D indicates the direction inclined with respect to the longitudinal direction A of the vehicle in which the means for connection to the floor panel have been mounted.

Figure 5 shows the seat in its inoperative condition, in which the frame 7 of the backrest partially overlaps the frame 6 of the cushion. In the inoperative condition, the structure of the seat has displaced slightly in the transverse direction B.

Once again with reference to Figures 1 and 2, the stuffing 15, 16 is preferably shaped so as to mask the inclination of the means 4 for connection to the floor panel. In practice, a user sitting on the seat does not realize that the seat is inclined in so far as the stuffing is shaped and oriented according to the longitudinal direction A.

Of course, without prejudice to the principle of the invention, the details of construction and the embodiments may vary widely with respect to what is described and illustrated herein purely by way of example, without thereby departing from the scope of the present invention.

## Claims

1. A seat for a motor vehicle, comprising a cushion (2) and a backrest (3) with respective frames (6,7) provided with means (4) for connection to the floor panel (5), which enable a displacement of the seat (1) between a condition of normal use and an inoperative condition of reduced encumbrance, where the seat is folded on the floor panel,
said seat being **characterized in that** it comprises means (8) for transmitting motion from the frame (7) of the backrest to the frame (6) of the cushion, which include a closed-loop transmission element.

2. The seat according to Claim 1, **characterized in that** said closed-loop transmission element engages both a first wheel (10), which is connected in rotation to the frame of the backrest (7) about an axis of oscillation of the backrest, and a second wheel (11), which is connected in rotation to a lever (6a) that connects the frame (6) of the cushion to the floor panel (5) about the axis of oscillation of said lever on the floor panel.

3. The seat according to Claim 1 or Claim 2, **characterized in that** said means (8) for transmitting motion from the frame (7) of the backrest to the frame (6) of the cushion comprise a chain transmission (12) and gears (10, 11).

4. The seat according to one or more of the preceding claims, **characterized in that** said means (4) for connection to the floor panel are provided in such a way as to enable, during the displacement between the condition of use and the inoperative condition, a displacement of the seat (1) also in a horizontal direction (B) orthogonal to the longitudinal direction (A) of the vehicle.

5. The seat according to Claim 4, **characterized in that** said connection means (4) are positioned on the floor panel (5) according to a direction (D) inclined with respect to the longitudinal direction (A) of the vehicle.

6. The seat according to Claim 5, **characterized in that** the stuffing (15, 16) of the cushion and of the backrest is oriented in the longitudinal direction (A) so as to mask the inclination of the means (4) for connection to the floor panel.

7. A seat for a motor vehicle, comprising a cushion (2) and a backrest (3) with respective frames (6, 7) provided with means (4) for connection to the floor panel (5), which enable a displacement of the seat (1) between a condition of normal use and an inoperative condition of reduced encumbrance, where the seat is folded on the floor panel,
said seat being **characterized in that**:
- the frame (7) of the backrest has the base articulated to the floor panel about a first transverse axis;
- the frame (6) of the cushion is connected at the rear in an articulated way to the free end of at least one lever (6a) mounted oscillating on the floor panel about a second transverse axis parallel and advanced with respect to the first transverse axis; and
- the frame (6) of the cushion moreover carries at least one longitudinal guide (14), which is engaged so that it can slide on a respective guide element (15, 16) fixed to the floor panel;
said seat further comprising means for transmitting an oscillation impressed upon the frame (7) of the backrest about said first transverse axis to the aforesaid connection lever (6a) of the frame (6) of the cushion about said second transverse axis, so that, when the backrest is tipped forwards, there occurs an oscillation forwards of the rear part of the cushion and a simultaneous sliding of said longitudinal guide (14) with respect to the corresponding guide element (15, 16), until the cushion lies down flat on the floor panel, in front of the position that the cushion itself assumes in the condition of normal use.

8. The seat according to Claim 7, **characterized in that** said means for transmitting an oscillation impressed upon the frame (7) of the backrest comprise a closed-loop transmission element, which engages both a first wheel (10), connected in rotation to the frame of the backrest (7) about an axis of oscillation of the backrest, and a second wheel (11), connected in rotation to a lever (6a), which connects the frame (6) of the cushion to the floor panel (5) about the axis of oscillation of said lever (6a) on the floor panel.
